# EUROPEAN PATENT APPLICATION

(11) **EP 4 693 657 A1**
(43) Date of publication of application: **11.02.2026**
(21) Application number: 24854405.8
(22) Date of filing: 09.08.2024
(51) Int. Cl.: H01M 50/242, H01M 50/211, H01M 50/249, H01M 50/291, H01M 50/502, H01M 10/6551

(54) **BATTERY PACK AND DEVICE INCLUDING SAME**

(30) Priority: 11.08.2023 KR 20230105715; 08.08.2024 KR 20240106318
(71) Applicant: LG Energy Solution, Ltd., Seoul 07335 (KR)
(72) Inventor: HWANG, Taewon, Daejeon 34122 (KR); SEO, Sung Won, Daejeon 34122 (KR); YUN, Hyeonki, Daejeon 34122 (KR); KANG, Jongmo, Daejeon 34122 (KR)
(74) Representative: Plasseraud IP
(86) International application number: PCT/KR2024/011854
(87) International publication number: WO 2025/037854

(57) **Abstract**

A battery pack according to an embodiment of the present disclosure comprises: a plurality of battery cell assemblies each including a battery cell stack formed by stacking a plurality of battery cells, and configured to expose at least a portion of both side surfaces and upper and lower surfaces of the battery cell stack; a lower pack frame on which the plurality of battery cell assemblies are mounted; and a crossbeam which is formed in the inside of the lower pack frame and extends along between a pair of adjacent battery cell assemblies among the plurality of battery cell assemblies, wherein the battery cell assembly includes a sub-crossbeam that contacts at least one side surface of the battery cell stack, and wherein the crossbeam and the sub-crossbeam are spaced apart from each other.

## Description

### [TECHNICAL FIELD]

### Cross Citation with Related Application(s)

This application claims the benefit of Korean Patent Application No. 10-2023-0105715 filed on August 11, 2023 and Korean Patent Application No. 10-2024-0106318 filed on August 8, 2024 in the Korean Intellectual Property Office, the disclosures of which are incorporated herein by reference in their entirety.

The present disclosure relates to a battery pack and a device including the same, and more specifically, to a battery cell assembly comprising a battery cell stack in which a plurality of battery cells are stacked, a battery pack having a CTP (Cell To Pack) structure which houses the battery cell assembly in the inside of a pack frame, and a device including the same.

In particular, the present disclosure also relates to a battery pack which comprises a sub-crossbeam located on at least one side surface of a battery cell stack, wherein the sub-crossbeam is spaced apart from the crossbeam inside the pack frame, and a device including the same.

### [BACKGROUND]

In recent years, as the demand for portable electronic products such as notebook computers, video cameras, mobile phones , and the like, has been rapidly increasing, and electric vehicles, energy storage batteries, robots, satellites, and the like have been developed in earnest, a high-performance secondary battery which can be repeatedly charged and discharged are being actively researched.

Currently, commercially available secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed therebetween, and an outer material that seals and houses the electrode assembly together with the electrolyte.

Meanwhile, the lithium a secondary battery may be classified based on the shape of a battery case into a can-type secondary battery in which the electrode assembly is embedded in a metal can, and a pouch-type secondary battery in which the electrode assembly is embedded in a pouch made of an aluminum laminate sheet. In addition, the can-type secondary battery can be further classified into a cylindrical battery and a prismatic battery according to the shape of the metal can.

Here, the pouch of the pouch-type secondary battery may be largely divided into a lower sheet and an upper sheet that covers the lower sheet. In this instance, the pouch houses the electrode assembly including the positive electrode, the negative electrode and the separator stacked and wound together. In addition, after the electrode assembly is housed, the edges of the upper sheet and the lower sheet are sealed by thermal fusion or the like. In addition, an electrode tab drawn out from each electrode may be coupled to an electrode lead, and an insulating film may be added to a portion where the electrode lead is contact with the sealing portion.

In this way, the pouch-type secondary battery can have the flexibility to be configured in various forms. In addition, the pouch-type secondary battery has the advantage of being able to realize a secondary battery of the same capacity with a smaller volume and mass.

In order for a lithium secondary battery to provide high voltage and high current, a plurality of battery cells are overlapped or stacked by themselves or overlapped or stacked while mounted on a cartridge to form a dense structure, and then, are used as a battery module or a battery pack in which the battery cells are electrically connected.

However, such a conventional battery pack may be disadvantageous in terms of energy density. In particular, in a process of housing and modularizing a plurality of battery cells in a module case, the volume of a battery pack may be unnecessarily increased or a space occupied by the battery cells may be reduced due to various components such as the module case or a stacking frame. Furthermore, in order to secure an assembly tolerance for the components such as the module case or the stacking frame as well as a space occupied by the components, a receiving space for the battery cells may be reduced. Accordingly, there may be limitations in increasing the energy density of the conventional battery pack.

Also, the conventional battery pack may be disadvantageous in terms of assembly property. In particular, in order to manufacture a battery pack, because a plurality of battery cells are first modularized to form a battery module and then the battery module is housed in a pack case, a process of manufacturing a battery pack becomes complicated. Moreover, a process and structure of forming a cell stack by using a stacking frame, a bolt, a plate, etc. may be very complicated.

Also, the conventional battery pack has a problem in that because a module case is housed in a pack case and battery cells are housed in the module case, it is difficult to ensure excellent cooling performance. In particular, when heat of the battery cells housed in the module case is discharged to the outside of the pack case through the module case, cooling efficiency may be reduced and a cooling structure may be complicated.

In particular, the battery pack must be able to control a swelling phenomenon of the battery cells that occurs during the charging and discharging process of the battery cells included in the battery module. More specifically, the battery cells may cause a phenomenon in which the internal electrolyte decomposes to generate gas and the battery cell swells in the process of repeated charging and discharging, that is, a swelling phenomenon. If such swelling of the battery cells cannot be controlled, it may cause structural deformation of a battery module including a plurality of battery cells and may adversely affect the durability and performance of the battery module.

In particular, recently, Pure Si cells and high SiO content cells are used as battery cells to manufacture a high-capacity battery pack, and in the case of the cells, the degree of swelling is greater. In other words, in order to manufacture high-capacity battery modules and battery packs, it is essential to effectively control the swelling of battery cells inside the battery module or battery pack.

Therefore, there is a need to develop technology for a battery pack that can effectively control the swelling of battery cells while increasing space efficiency.

### [DETAILED DESCRIPTION OF THE INVENTION]

### [Technical Problem]

The present disclosure is designed to solve the above-mentioned problems, and therefore an object of the present disclosure is to provide a battery cell assembly comprising a battery cell stack in which a plurality of battery cells are stacked, a battery pack having a CTP (Cell To Pack) structure which houses the battery cell assembly in the inside of a pack frame, and a device including the same.

In particular, an object of the present disclosure is to provide a battery pack which comprises a sub-crossbeam located on at least one side surface of a battery cell stack, wherein the sub-crossbeam is spaced apart from the crossbeam inside the pack frame, and a device including the same.

However, the objects of the present disclosure are not limited to the aforementioned objects, and other objects which are not mentioned herein should be clearly understood by those skilled in the art from the following detailed description and the accompanying drawing.

### [Technical Solution]

According to an embodiment of the present disclosure, there is provided a battery pack comprising: a plurality of battery cell assemblies each including a battery cell stack formed by stacking a plurality of battery cells, and configured to expose at least a portion of both side surfaces and upper and lower surfaces of the battery cell stack; a lower pack frame on which the plurality of battery cell assemblies are mounted; and a crossbeam which is formed in the inside of the lower pack frame and extends along between a pair of adjacent battery cell assemblies among the plurality of battery cell assemblies, wherein the battery cell assembly includes a sub-crossbeam that contacts at least one side surface of the battery cell stack, and wherein the crossbeam and the sub-crossbeam are spaced apart from each other.

The battery cell assembly may further include a busbar frame located at the front and rear surfaces of the battery cell stack, both ends of the sub-crossbeam may have at least one first coupling hole formed in a portion overlapping with the busbar frame, and the sub-crossbeam and the busbar frame may be fixed to each other through the first coupling hole.

The sub-crossbeam and the busbar frame may be bolted to each other.

The sub-crossbeam includes a main body portion and a bent portion, and the main body portion extends along the side surface of the battery cell stack, wherein one end of the bent portion is connected to the upper end of the main body portion, and the other end of the bent portion extends toward the upper portion of the crossbeam.

The other end of the bent portion may overlap with the upper portion of the crossbeam.

The other end of the bent portion may have at least one second coupling hole formed in a portion overlapping with the upper portion of the crossbeam, and the other end of the bent portion and the upper portion of the crossbeam may be fixed to each other through the second coupling hole.

The other end of the bent portion and the upper portion of the crossbeam may be bolted to each other.

The height of the crossbeam may be smaller than the height of the lower pack frame.

The sum of the height of the crossbeam and the thickness of the bent portion may be equal to or less than the height of the lower pack frame.

The sub-crossbeam may include a first sub-crossbeam and a second sub-crossbeam, wherein the first sub-crossbeam may contact one side surface of the battery cell stack, and the second sub-crossbeam may contact the other side surface of the battery cell stack.

The battery cell assembly may further include a first thermal resin layer applied between the lower surface of the battery cell stack and the lower pack frame, wherein the first thermal resin layer may extend to the lower portion of the sub-crossbeam.

The battery cell assembly may include a second thermal resin layer applied to the upper portion of the battery cell stack, wherein the second thermal resin layer may extend to the upper portion of the sub-crossbeam.

The battery cell assembly may further include a pad member located between the battery cell stack and the sub-crossbeam.

According to another embodiment of the present disclosure, there is provided a device comprising at least one battery pack as described above.

### [Advantageous Effects]

According to one embodiment, a battery pack of the present disclosure and a device comprising the same have advantages of simplifying the assembly process while having a high energy density compared to a conventional battery pack, due to a battery cell assembly comprising a battery cell stack in which a plurality of battery cells are stacked, and a CTP (Cell To Pack) structure which accommodates the battery cell assembly in the inside of a pack frame.

Also, the battery pack of the present disclosure and the device comprising the same can improve the fixing force of the battery cell assembly to the pack frame and further improve the stiffness of the battery pack having a CTP structure by including a sub-crossbeam located on at least one side surface of the battery cell stack.

In addition, the battery pack of the present disclosure and the device comprising the same can effectively control the swelling phenomenon of the battery cell because the above-mentioned sub-crossbeam is spaced apart from the crossbeam inside the pack frame.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is a perspective view of a battery cell assembly according to an embodiment of the present disclosure.
FIG. 2 is an exploded perspective view of the battery cell assembly of FIG. 1.
FIG. 3 is a side view illustrating one of the battery cells included in the battery cell assembly of FIG. 1.
FIG. 4 is a perspective view illustrating a sub-crossbeam located on at least one side surface of the battery cell assembly of FIG. 1.
FIG. 5 is a perspective view illustrating a battery pack according to another embodiment of the present disclosure.
FIG. 6 is a cross-sectional view schematically illustrating a portion of a cross section cut along the zy plane of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a battery cell assembly according to embodiments of the present disclosure will be described.

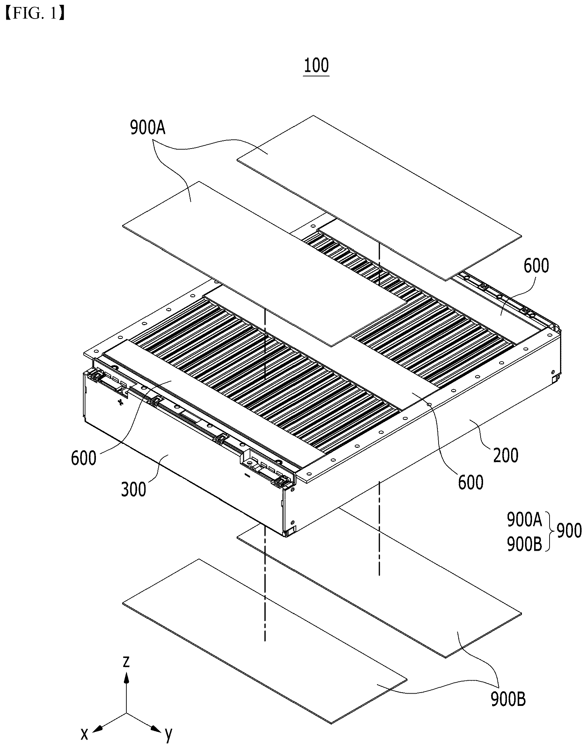

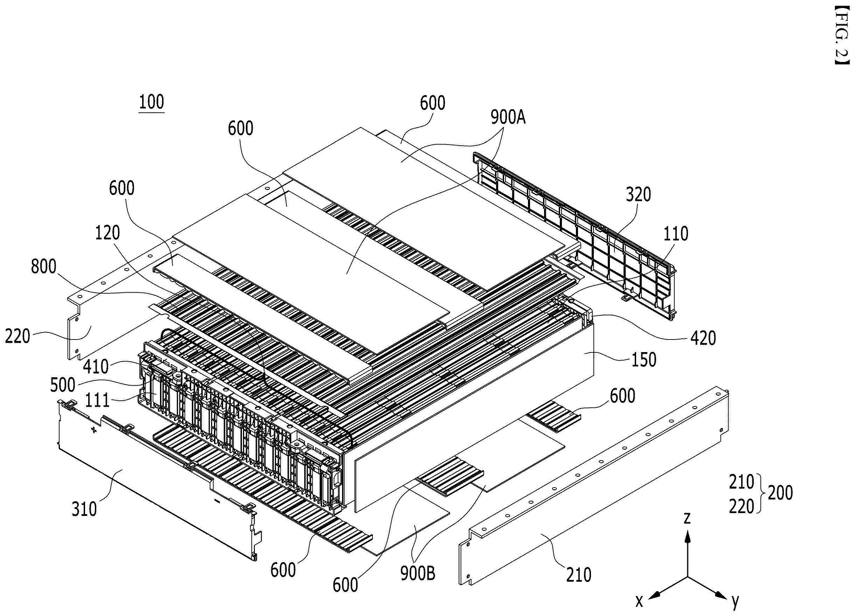

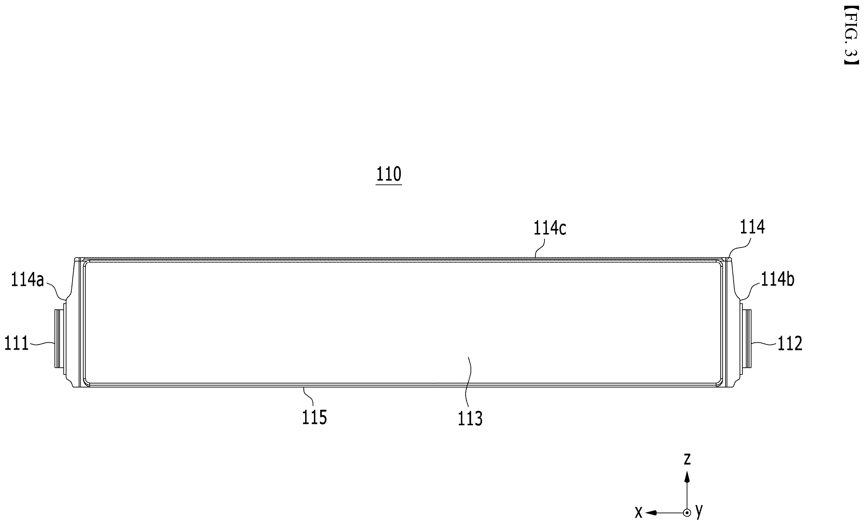

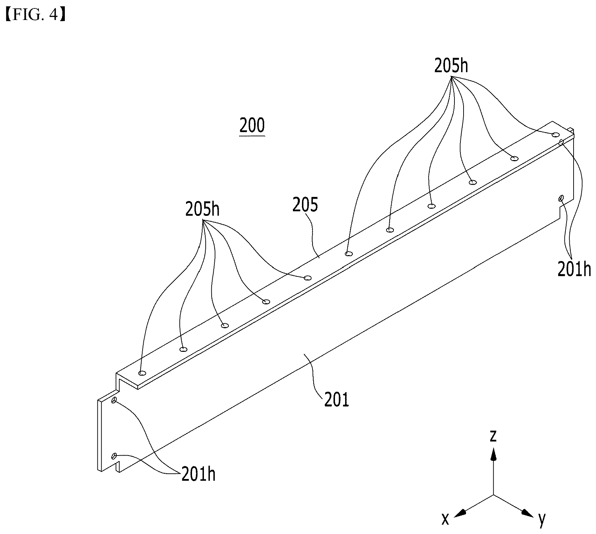

FIG. 1 is a perspective view of a battery cell assembly according to an embodiment of the present disclosure. FIG. 2 is an exploded perspective view of the battery cell assembly of FIG. 1. FIG. 3 is a side view illustrating one of the battery cells included in the battery cell assembly of FIG. 1. FIG. 4 is a perspective view illustrating a sub-crossbeam located on at least one side surface of the battery cell assembly of FIG. 1.

Referring to FIGS. 1 and 2, the battery cell assembly 100 includes a battery cell stack 120 formed by stacking a plurality of battery cells 110, respectively. More specifically, the battery cell stack 120 may be formed by stacking a plurality of battery cells 110 to be electrically connected to each other. Here, the number of battery cells 110 constituting the battery cell stack 120 may be adjusted depending on the case.

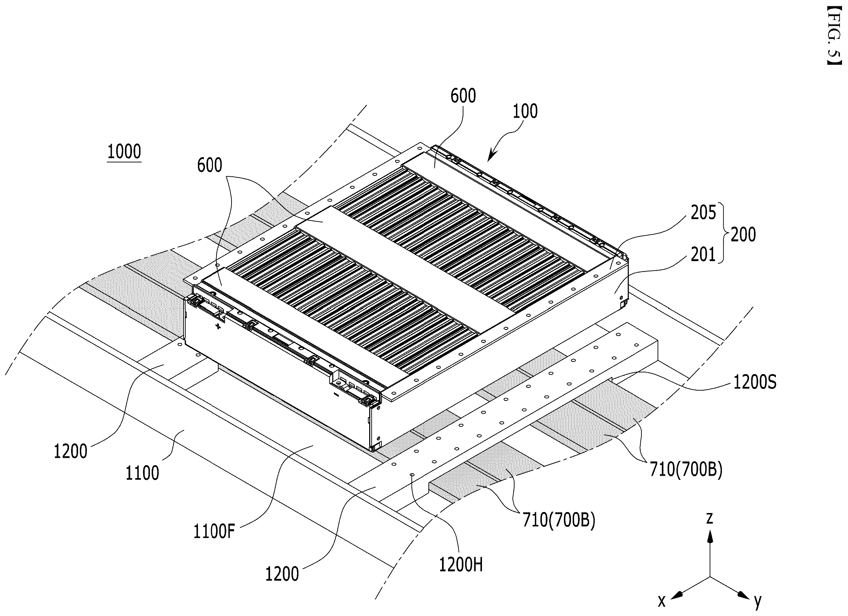

Also, at least a portion of both side surfaces and the upper and lower surfaces of the battery cell stack 120 may be exposed. More specifically, a conventional battery module has a structure that is modularized by being housed inside a separate module case, whereas the battery cell assembly 110 does not house the battery cell stack 120 inside a separate module case, and can be housed in the lower pack frame 1100 (FIG. 5) in a state where at least a portion of both side surfaces and the upper and lower surfaces of the battery cell stack 120 is being exposed.

Thereby, the battery cell assembly 100 according to the present embodiment does not need to further comprise components such as a module case, as in a conventional battery module or pack. That is, as the space occupied by the corresponding components in the present embodiment is eliminated, the battery cell can occupy more space, which can further improve the energy density, reduce the overall volume or weight, and simplify the manufacturing process.

In addition, in the battery cell assembly 100, the lower portion of the battery cell stack 120 may be exposed. That is, when the battery cell assembly 100 is housed in the lower pack frame 1100 (FIG. 5) described below, the lower portion of the battery cell 110 included in the battery cell stack 120 may be exposed toward the bottom surface of the lower pack frame 1100 (FIG. 5).

Thereby, in the battery cell assembly 100 according to the present embodiment, the lower portion of the battery cell 110 included in the battery cell stack 120 can oppositely come in direct contact with the bottom surface of the lower pack frame 1100 (FIG. 5), thereby further improving the cooling performance of the battery pack 1000 (FIG. 5). That is, the heat emitted from the battery cell 110 is directly transmitted to the lower pack frame 1100 (FIG. 5), thereby further improving the cooling performance of the battery pack 1000 (FIG. 5). In this case, since a separate cooling structure does not need to be provided between the battery cell 110 and the lower pack frame 1100 (FIG. 5), efficient cooling performance can be achieved.

Referring to FIGS. 2 and 3, in the battery cell assembly 100, the battery cell 110 may be a pouch-type battery cell. The pouch-type battery cell can be formed by housing an electrode assembly in a pouch case made of a laminated sheet including a resin layer and a metal layer and then bonding the outer periphery of the pouch case. The battery cell 110 may be formed in a rectangular sheet structure. Specifically, the battery cell 110 according to the present embodiment may have a structure in which two electrode leads 111 and 112 face each other and protrude from one end portion 114a and the other end portion 114b, respectively. The battery cell 110 can be produced by joining both end portions 114a and 114b of a cell case 114 and one side portion 114c connecting them in a state in which an electrode assembly (not shown) is housed in a cell case 114. In other words, the battery cell 110 according to an embodiment of the present disclosure has a total of three sealing portions, wherein the sealing portions have a structure that is sealed by a method such as thermal fusion, and the remaining other side portion may be composed of a connecting portion 115.

However, the above-mentioned battery cell 110 is an exemplary structure, and it goes without saying that a unidirectional battery cell in which two electrode leads protrude in the same direction is also possible.

Such battery cells 110 may be formed in a plurality of numbers, and the plurality of battery cells 110 may be stacked to be electrically connected to each other, thereby forming a battery cell stack 120. In particular, as illustrated in FIG. 2, the plurality of battery cells 110 may be stacked along a direction parallel to the y-axis. The battery case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, a tacky adhesive such as a double-sided tape or a chemical adhesive that bonds through chemical reactions during adhesion can be attached to the surface of the battery case to form a battery cell stack 120.

As another example, unlike FIG. 3, the battery cell 110 may be a prismatic battery cell or a cylindrical battery cell in the form of a jelly roll. However, any form that can form a battery cell stack 120 including a large number of battery cells 110 in a limited space within the battery cell assembly 100 can be applied to the present embodiment.

Meanwhile, the battery cell assembly 100 according to the present embodiment may further include: a first end plate 310 and a second end plate 320 located respectively on one side and the other side of the battery cell stack 120; a first busbar frame 410 located between the battery cell stack 120 and the first end plate 310; and a second busbar frame 420 located between the battery cell stack 120 and the second end plate 320.

More specifically, a first busbar frame 410 and a first end plate 310 may be sequentially located on one side of the direction in which any one electrode lead 111 of a battery cell 110 protrudes (x-axis direction), and a second busbar frame 420 and a second end plate 320 may be sequentially located on the other side of the direction in which the other electrode lead 112 of the battery cell 110 protrudes (-x-axis direction).

The first busbar frame 410 and the second busbar frame 420 may be arranged to cover the front and rear surfaces of the battery cell stack corresponding to the directions in which the electrode leads 111 and 112 protrude (x-axis direction and -x-axis direction), respectively.

The first end plate 310 and the second end plate 320 may be arranged to cover one surface of the first busbar frame 410 and one surface of the second busbar frame 420, respectively. The first end plate 310 and the second end plate 320 may be plastic insulating covers having electrical insulation, and may protect other electrical components, including the busbar 500 or the electrode leads 111 and 112, located on the first busbar frame 410 and the second busbar frame 420, from the outside, and at the same time, can block the possibility of a short circuit with the outside.

In another embodiment of the present disclosure, the first end plate 310 and the second end plate 320 may include a metal material such as aluminum and thus have high stiffness. However, in this case, it is preferable that a separate insulating cover is added between the first end plate 310 and the first busbar frame 410 and between the second end plate 320 and the second busbar frame 420.

The battery cell assembly 100 according to the present embodiment may further comprise busbars 500 mounted on the first busbar frame 410 and the second busbar frame 420. Illustration of the second busbar frame 420 and the busbar 500 mounted thereon is omitted, but may have a structure same as or similar to the first busbar frame 410.

The electrode leads 111 and 112 of the battery cell 110 is bent after passing through a lead slit formed in the first busbar frame 410 or the second busbar frame 420 and can be connected to the busbar 410. More specifically, one electrode lead 111 can be connected to the busbar 500 after passing through the lead slit of the first busbar frame 410, and the other electrode lead 112 can be connected to the busbar 500 after passing through the lead slit of the second busbar frame 420. The connection method between the electrode leads 111 and 112 and the busbar 500 is not particularly limited, but as an example, weld-joining may be performed.

In this same manner, the battery cells 110 constituting the battery cell stack 120 may be connected in series or in parallel with each other.

Meanwhile, although not specifically shown in the figure, the first busbar frame 410 or the second busbar frame 420 can be mounted with a terminal busbar for external power connection of the battery module 100 and a module connector for voltage and temperature sensing information transmission.

Referring to FIGS. 2 and 4, the battery cell assembly 100 may include a sub-crossbeam 200 that contacts at least one side surface of the battery cell stack 120. More specifically, the sub-crossbeam 200 includes a first sub-crossbeam 210 and a second sub-crossbeam 220, wherein the first sub-crossbeam 210 may contact one side surface of the battery cell stack 120, and the second sub-crossbeam 220 may contact the other side surface of the battery cell stack 110. As an example, the first sub-crossbeam 210 and the second sub-crossbeam 220 may be configured to be identical to each other but symmetric to each other.

As an example, the sub-crossbeam 200 may be made of a steel material, more particularly, a stainless steel (SUS) material. As another example, the cell cover may be made entirely of a SUS material.

Thereby, in the battery cell assembly 100 according to the present embodiment, if the sub-crossbeam 200 is made of a steel material, it has excellent mechanical strength and stiffness, and therefore can more stably support the stacked state of the plurality of battery cells 110 included in the battery cell stack 120. Also, in this case, damage or breakage of the battery cell 110 from external impacts, such as a needle-like body, can be prevented more effectively. In addition, in this case, the handling of the battery cell 110 can be made easier.

Referring to FIG. 4, the sub-crossbeam 200 may include a main body potion 201 and a bent portion 205. Here, the main body portion 201 and the bent portion 205 may be connected to each other. Here, the main body portion 201 and the bent portion 205 may be integrated with each other, or may be fixed to each other by a separate joining/coupling method such as welding.

More specifically, the main body portion 201 may extend along the side surface of the battery cell stack 120. Here, the main body portion 201 may have a size equal to or larger than the side surface of the battery cell stack 120.

In the sub-crossbeam 200, both ends of the sub-crossbeam 200 may be formed with at least one first coupling hole 201h. More specifically, both ends of the main body portion 201 of the sub-crossbeam 200 may be formed with at least one first coupling hole 201h. Here, at least one first coupling hole 201h may be formed in a portion where the main body portion 201 of the sub-crossbeam 200 and the busbar frames 410 and 420 overlap. That is, the sub-crossbeam 200 and the busbar frames 410 and 420 may be fixed to each other through the first coupling hole 201h.

As an example, the sub-crossbeam 200 and the busbar frames 410 and 420 may be bolted to each other. Here, although not shown in FIGS. 2 and 4, as the long bolt member is inserted into the first coupling hole 201h, the sub-crossbeam 200 and the busbar frames 410 and 420 may be fastened to each other.

As another embodiment of the present disclosure, the sub-crossbeam 200 can be fixed to each other through the end plates 310 and 320 and the first coupling hole 201h. In this case, the position of the first coupling hole 201h in the sub-crossbeam 200 can be changed to a portion where the main body portion 201 and the end plates 310 and 320 overlap.

Accordingly, the battery cell assembly 100 according to the present embodiment further comprises the sub-crossbeam 200 located on one side surface of the battery cell stack 120, which can further ensure the stiffness of the battery cell assembly 100, and stably maintain the stacked state while protecting the battery cell 110 included in the battery cell stack 120 from external impacts.

In addition, one end of the bent portion 205 may be connected to the upper end of the main body portion 201, and the other end of the bent portion 205 may extend in the opposite direction toward the battery cell stack 120. More specifically, the other end of the bent portion 205 may extend toward the upper portion of the crossbeam 1200 (FIG. 5) formed in the lower pack frame 1100 described below. That is, the other end of the bent portion 205 may overlap with the upper portion of the crossbeam 1200 (FIG. 5).

In the sub-crossbeam 200, at least one second coupling hole 205h may be formed in the bent portion 205. More specifically, the other end of the bent portion 205 may be formed with at least one second coupling hole 205h. Here, at least one second coupling hole 205h may be formed in a portion where the other end of the bent portion 205 and the upper portion of the crossbeam 1200 (FIG. 5) overlap. That is, the other end of the bent portion 205 and the upper portion of the crossbeam 1200 (FIG. 5) may be fixed to each other through the second coupling hole 205h.

As an example, the other end of the bent portion 205 and the upper portion of the crossbeam 1200 (FIG. 5) may be bolted to each other. Here, although not shown in FIGS. 2 and 4, as the long bolt member is inserted into the second joining hole 205h, the other end of the bent portion 205 and the upper portion of the crossbeam 1200 (FIG. 5) may be fastened to each other.

Therefore, the battery cell assembly 100 according to the present embodiment further comprises a sub-crossbeam 200 located on one side surface of the battery cell stack 120, which can further ensure the stiffness of the battery cell assembly 100, and stably maintain the stacked state while protecting the battery cells 110 included in the battery cell stack 120 from external impact.

Furthermore, the battery cell assembly 100 according to the present embodiment has a structure in which the sub-crossbeam 200 located on one side surface of the battery cell stack 120 is fixed to each other with the crossbeam 1200 (FIG. 5), which can effectively ensure fixing force between the battery cell assembly 100 and the lower pack frame 1100 (FIG. 5).

In addition, due to such fixation between the sub-crossbeam 200 and the crossbeam 1200 (FIG. 5), a separate adhesive layer may be omitted at the lower portion of the battery cell assembly 100, or even if an adhesive layer is added, a member having a relatively weak adhesive strength may be used. That is, when the adhesive layer is omitted between the lower portion of the battery cell assembly 100 and the lower frame 1100 (FIG. 5), or an adhesive layer having a weak adhesive strength is added, the battery cell assembly 100 can be easily released from the coupling between the lower pack frames 1100 (FIG. 5), and replacement of the battery cell assembly 100 can also be made easy.

Further, the battery cell assembly 100 may further comprise a pad member 150 located between the battery cell stack 120 and the sub-crossbeam 200. More specifically, the pad member 150 may be an insulating member, a heat insulating member, or a compression pad.

As an example, if the pad member 150 is an insulating member, it can block electrical connection between the side surface of the battery cell stack 120 and the external element. As another example, if the pad member 150 is a heat insulating member, it can prevent heat from propagating to the inside and outside when an abnormal phenomenon such as a thermal runaway phenomenon occurs in some of the battery cells 110 included in the battery cell stack 120. As another example, if the pad member 150 is a compression pad, it can effectively control swelling that occurs in some of the battery cells 110 included in the battery cell stack 120.

Further, the battery cell assembly 100 according to the present embodiment may further include a connecting member 600 that is located on the upper side and the lower side of the battery cell stack 120, respectively, and connects between the first sub-crossbeam 210 and the second sub-crossbeam 220. That is, the battery cell assembly 100 may not have a configuration in which the battery cell stack 120 is housed and sealed in the module housing, but may have a configuration in which the first sub-crossbeam 210 and the second sub-crossbeam 220 are arranged on both side surfaces of the battery cell stack 120, and the first sub-crossbeam 210 and the second sub-crossbeam 220 are fixed through the connecting member 600. That is, the battery cell assembly 100 according to the present embodiment has a simplified module housing structure compared to a conventional one, and can be mounted directly on the battery pack 1000 (FIG. 5) without a sealed module housing.

Accordingly, the battery cell assembly 100 according to the present embodiment omits the module housing structure, thereby increasing space utilization in the battery pack 1000 (FIG. 5) unit described below, improving the overall energy density and reducing weight.

The connecting member 600 according to the present embodiment may be a metal band-shaped member. More specifically, the connecting member 600 may be a band-shaped member including a metallic material formed of an elastic material.

The connecting member 600 may be provided alone or in combination of plurality thereof on at least one of the upper side or the lower side of the battery cell stack 120. As an example, the connecting member 600 may be provided in a plurality on at least one of the upper side or the lower side of the battery cell stack 120. FIG. 2 illustrates that a plurality of connecting members 600 are provided on both the upper side and lower side of the battery cell stack 120. Such connecting members 600 may be spaced apart from each other at a regular interval, and may be located at the upper part and the lower portion of the battery cell stack 120, respectively. As an example, FIG. 2 illustrates that three connecting members 600 are arranged on each of the upper side and the lower side of the battery cell stack 120.

The connecting member 600 is a member that connects the first sub-crossbeam 210 and the second sub-crossbeam 220 to each other as described above, and therefore, can be configured to extend along the stacking direction from the first sub-crossbeam 210 to the second sub-crossbeam 220, that is, the stacking direction of the battery cells 110. In other words, the connecting member 600 may extend along a direction parallel to the y-axis direction, so that one end may be connected to the first sub-crossbeam 210, and the other end may be connected to the second sub-crossbeam 220. Such a connecting member 600 may be fixed to the first sub-crossbeam 210 and the second sub-crossbeam 220 by welding.

Although not specifically shown in the figure, in another embodiment of the present disclosure, the connecting member 600 may further include a long bolt member that fastens both ends of the connecting member 600 and the first sub-crossbeam 210 and the second sub-crossbeam 220. That is, the connecting member 600 may be connected to the first sub-crossbeam 210 and the second sub-crossbeam 220 by bolting rather than welding.

Therefore, in the battery cell assembly 100 according to the present embodiment, the first sub-crossbeam 210 and the second sub-crossbeam 220 are also connected to each other by the connecting member 600, which can further ensure the stiffness of the battery cell assembly 100 while more stably maintaining connection between the battery cell stack 120 and the sub-crossbeam 200.

Meanwhile, referring to FIG. 2 again, the battery cell assembly 100 according to the present embodiment may further include an insulating sheet 800 located between the battery cell stack 120 and the connecting member 600 located on the upper side of the battery cell stack 120. The insulating sheet 800 is a thin sheet that is electrically insulating, and may be arranged to cover the entire upper surface of the battery cell stack 120 in order to ensure electrical insulation for the upper side of the battery cell stack 120. The insulating sheet 800 may be an insulating film or an insulating tape, and may have a thickness of 0.1 mm or less.

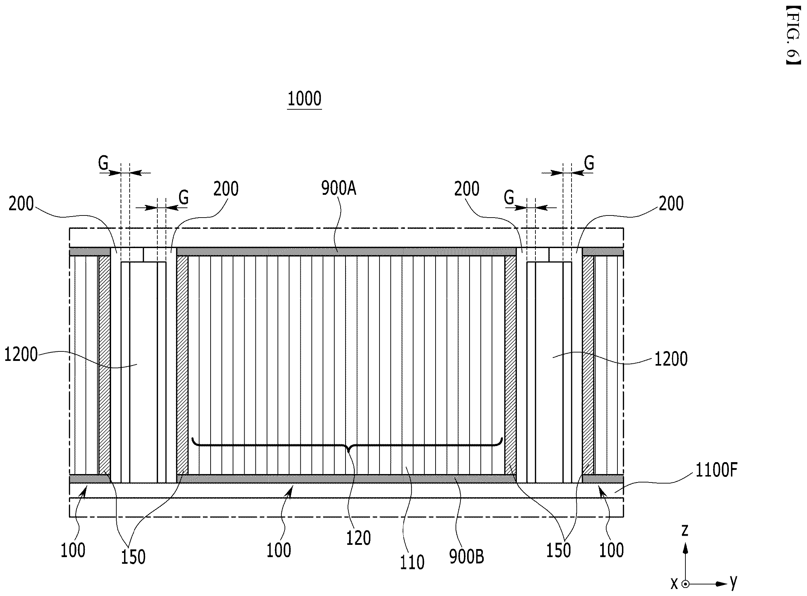

FIG. 5 is a perspective view illustrating a battery pack according to another embodiment of the present disclosure. FIG. 6 is a cross-sectional view schematically illustrating a portion of a cross section cut along the zy plane of FIG. 5.

Referring to FIGS. 5 and 6, a battery pack 1000 according to an embodiment of the present disclosure may include a lower pack frame 1100 in which a plurality of battery cell assemblies 100 are mounted, and a crossbeam 1200 formed in the inside of the lower pack frame 1100 and extending along between a pair of adjacent battery cell assemblies 100 among the plurality of battery cell assemblies 100. Here, the crossbeam 1200 may be fixed on the bottom surface 1100F of the lower pack frame 1100 by a joining method such as welding, or may be integrated with each other.

Although not shown in FIG. 5, the battery pack 1000 may further comprise an upper pack frame (not shown) located at the upper portion of the battery cell assembly 100. Here, the lower pack frame 1100 and the upper pack frame (not shown) may be joined to each other by a method such as welding or bonding, thereby sealing the inside of the battery pack 1000. However, the present disclosure is not limited thereto, and the pack frame of the battery pack 1000 may include an upper pack frame having an open lower end and a lower pack frame covering the lower portion of the upper pack frame. As an example, the lower pack frame 1100 and the upper pack frame (not shown) may be made of plastic or metal material. In addition, the pack case may employ various battery pack exterior materials known at the time of filing of the present disclosure.

Referring to FIGS. 5 and 6, the sub-crossbeam 200 and the crossbeam 1200 included in the battery cell assembly 100 may be spaced apart from each other. More specifically, the sub-crossbeam 200 and the crossbeam 1200 of the battery cell assembly 100 may be spaced apart from each other by a predetermined gap G.

Therefore, in the battery pack 1000 according to the present embodiment, the battery cell assembly 100 is spaced apart from the lower pack frame 1100 by a predetermined gap (G), so that swelling occurring in some of the battery cells 110 included in the battery cell assembly 100 can be effectively controlled. That is, even if some of the battery cells 110 swell due to the swelling phenomenon, the pressure applied to other battery cells 110 where the swelling phenomenon did not occur can be relatively reduced through the predetermined gap G, and structural deformation of the battery cell assembly 100 can be prevented.

In the battery pack 1000 according to the present embodiment, the upper portion of the crossbeam 1200 may further include a mounting hole 1200H formed at the same position as the second coupling hole 205h included in the sub-crossbeam 200 of the battery cell assembly 100. That is, the other end of the above-mentioned bent portion 205 and the mounting hole 1200H of the crossbeam 1200 may be bolted to each other. Here, although not shown in FIG. 5, as the long bolt member is inserted into the second coupling hole 205h and the mounting hole 1200H, the other end of the bent portion 205 and the upper portion of the crossbeam 1200 may be fastened to each other.

Furthermore, the height of the crossbeam 1200 may be smaller than the height of the lower pack frame 1100. The sum of the height of the crossbeam 1200 and the thickness of the bent portion 205 may be equal to or smaller than the height of the lower pack frame 1100.

Therefore, in the battery pack 1000 according to the present embodiment, even if the other end of the bent portion 205 of the sub-crossbeam 200 included in the battery cell assembly 100 partially overlaps with the upper portion of the crossbeam 1200, it may not affect the height or size of the battery pack 1000, and may increase the space efficiency of the battery pack 1000.

Referring to FIGS. 2, 5, and 6, the battery cell assembly 100 according to the present embodiment may further include a thermal resin layer 900 located between the battery cell stack 120 and the lower pack frame 1100. More specifically, the thermal resin layer 900 may be located between the cooling unit 710 located on the bottom surface of the lower pack frame 1100 and the battery cell stack 120. However, the cooling unit 710 may be omitted as in FIG. 6.

As an example, the battery cell assembly 100 further includes a first thermal resin layer 900B applied between the lower surface of the battery cell stack 120 and the lower pack frame 1100, wherein the first thermal resin layer 900B may extend to the lower portion of the sub-crossbeam 200. In addition, the battery cell assembly 100 includes a second thermal resin layer 900A applied to the upper portion of the battery cell stack 120, wherein the second thermal resin layer 900A may extend to the upper portion of the sub-crossbeam 200.

The thermal resin layer 900 can be formed by curing the thermal resin that has been applied or injected. Such a thermal resin can include a thermally conductive adhesive material, and specifically, can include at least one of a silicone material, a urethane material, and an acrylic material. The thermal resin can be in a liquid state when applied, but cured after application, which serves to fix one or more battery cells 110 that constitute the battery cell stack 120. In addition, it has excellent thermal conductivity and can quickly transfer heat generated from the battery cell 110 to the lower pack frame 1100 (FIG. 5).

Therefore, in the battery cell assembly 100 according to the present embodiment, if a thermal resin layer 900 is further included on an upper portion or a lower portion of the battery cell stack 120, the cooling performance of the battery pack 1000 can be further improved.

In addition, as shown in FIGS. 2 and 5, if a connecting member 600 is formed on the upper and lower portions of the battery cell assembly 100, the thermal resin layer 900 can be arranged in the space between the connecting members 600 that are spaced apart from each other.

In this case, since the thermal resin layer 900 is arranged in the space between the connecting members 600 that are spaced apart from each other, the increase in height can be minimized, thereby reducing the space loss in the height direction, and increasing the energy density of the battery pack.

Referring to FIG. 5, the battery pack 1000 according to the present embodiment further includes a heat sink 700B including at least one cooling unit 710 through which coolant flows, wherein the heat sink 700B may be located at the lower portion of the battery cell assembly 100. However, the present disclosure is not limited thereto, and the heat sink may also be located at the upper portion of the battery cell assembly 100, or the above-mentioned heat sink 700B may be omitted as in shown FIG. 6.

The heat sinks 700B may include at least one cooling unit 710 through which a coolant flows therein, respectively. Here, the cooling unit 710 of the heat sink 700B may be located at the lower portion of the above-mentioned first thermal resin layer 900B.

As an example, the cooling unit 710 may be a tube member having an internal space formed therein, and the internal space may be a space through which a coolant flows. The coolant may be cooling water, and the heat sink 700B according to the present embodiment may be a water-cooled cooling structure.

Therefore, when the battery pack 1000 according to the present embodiment further includes the heat sink 700B formed in the lower pack frame 1100, the cooling performance of the battery pack 1000 may be further improved.

As another example, as shown in FIGS. 2 and 5, when a connecting member 600 is formed at the upper and lower portions of the battery cell assembly 100, the cooling unit 710 of the heat sink 700B is located on one side of the connecting member 600 at the lower portion of the battery cell assembly 100. Specifically, the cooling unit 710 of the heat sink 700B can be arranged in the space between the connecting members 600 that are spaced apart from each other.

Therefore, as the heat sink 700B is arranged in the space between the connecting members 600 that are spaced apart from each other, the cooling structure can be arranged while minimizing the increase in height, thereby reducing the space loss in the height direction and increasing the energy density of the battery pack.

The above-mentioned battery cell assembly and the battery pack including the same can be applied to various devices. Such devices can be applied to vehicle means such as an electric bike, an electric vehicle, and a hybrid electric vehicle, but are not limited thereto, and can be applied to various devices capable of using a battery cell assembly and a battery pack including the same, which also falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery cell assembly
110: battery cell
120: battery cell stack
150: pad member
200: sub-crossbeam
201: main body portion
205: bent portion
210: first sub-crossbeam
220: second sub-crossbeam
300: end plate
410, 420: busbar frame
600: connecting member
900: thermal resin layer
1000: battery pack
1100: lower pack frame
1200: crossbeam

## Claims

1. A battery pack comprising:
a plurality of battery cell assemblies each including a battery cell stack formed by stacking a plurality of battery cells, and configured to expose at least a portion of both side surfaces and upper and lower surfaces of the battery cell stack;
a lower pack frame on which the plurality of battery cell assemblies are mounted; and
a crossbeam which is formed in the inside of the lower pack frame and extends along between a pair of adjacent battery cell assemblies among the plurality of battery cell assemblies,
wherein the battery cell assembly includes a sub-crossbeam that contacts at least one side surface of the battery cell stack, and
wherein the crossbeam and the sub-crossbeam are spaced apart from each other.

2. The battery pack of claim 1, wherein:
the battery cell assembly further includes a busbar frame located at the front and rear surfaces of the battery cell stack,
both ends of the sub-crossbeam have at least one first coupling hole formed in a portion overlapping with the busbar frame, and
the sub-crossbeam and the busbar frame are fixed to each other through the first coupling hole.

3. The battery pack of claim 2, wherein:
the sub-crossbeam and the busbar frame are bolted to each other.

4. The battery pack of claim 1, wherein:
the sub-crossbeam includes a main body portion and a bent portion, and
the main body portion extends along the side surface of the battery cell stack,
wherein one end of the bent portion is connected to the upper end of the main body portion, and the other end of the bent portion extends toward the upper portion of the crossbeam.

5. The battery pack of claim 4, wherein:
the other end of the bent portion overlaps with the upper portion of the crossbeam.

6. The battery pack of claim 5, wherein:
the other end of the bent portion has at least one second coupling hole formed in a portion overlapping with the upper portion of the crossbeam, and
the other end of the bent portion and the upper portion of the crossbeam are fixed to each other through the second coupling hole.

7. The battery pack of claim 6, wherein:
the other end of the bent portion and the upper portion of the crossbeam are bolted to each other.

8. The battery pack of claim 4, wherein:
the height of the crossbeam is smaller than the height of the lower pack frame.

9. The battery pack of claim 8, wherein:
the sum of the height of the crossbeam and the thickness of the bent portion is equal to or less than the height of the lower pack frame.

10. The battery pack of claim 1, wherein:
the sub-crossbeam includes a first sub-crossbeam and a second sub-crossbeam,
wherein the first sub-crossbeam contacts one side surface of the battery cell stack, and the second sub-crossbeam contacts the other side surface of the battery cell stack.

11. The battery pack of claim 1, wherein:
the battery cell assembly further includes a first thermal resin layer applied between the lower surface of the battery cell stack and the lower pack frame,
wherein the first thermal resin layer extends to the lower portion of the sub-crossbeam.

12. The battery pack of claim 11, wherein:
the battery cell assembly includes a second thermal resin layer applied to the upper portion of the battery cell stack,
wherein the second thermal resin layer extends to the upper portion of the sub-crossbeam.

13. The battery pack of claim 1, wherein:
the battery cell assembly further includes a pad member located between the battery cell stack and the sub-crossbeam.

14. A device comprising at least one battery pack as set forth in claim 1.
